# EUROPÄISCHE PATENTANMELDUNG

(11) **EP 1 424 553 A2**
(43) Veröffentlichungstag der Anmeldung: **02.06.2004**
(21) Anmeldenummer: 03021969.5
(22) Anmeldetag: 30.09.2003
(51) Int. Cl.: G01N 27/72

(54) **Einrichtung mit Aufhängung eines Probenkörpers**

(30) Priorität: 29.11.2002 DE 10255696
(71) Anmelder: ABB PATENT GmbH, 68526 Ladenburg (DE)
(72) Erfinder: Bauer, Thomas, Dipl.-Phys., 61350 Bad Homburg (DE); Vogel, Albrecht, Dr.-Ing., 76297 Stutensee (DE); Krippner, Peter, Dr.-Ing., 76199 Karlsruhe (DE); Wetzko, Manfred, 69259 Wilhelmsfeld (DE); Schmidt, Christian J., Dr., 69115 Heidelberg (DE); Ruzzu, Antonio, Dr.-Ing., 76227 Karlsruhe (DE); Merte, Rolf, Dr., 35041 Marburg (DE)
(74) Vertreter: Schmidt, Karl Michael

(57) **Zusammenfassung**

Die Erfindung betrifft eine Einrichtung mit Aufhängung eines Probenkörper, welcher sich um eine ortsfeste oder eine ortsfest bezogene Drehachse, in Abhängigkeit der Intensität eines Messeffektes im Raum dreht, gemäß Oberbegriff des Patentanspruches 1. Um hierbei eine sichere, und weitestgehend lateralverschiebungsfreie Drehlagerung einer Probenmassen bei der genannten Einrichtung zu gewährleisten, ist erfindungsgemäß vorgeschlagen, dass die aus mindestens 2 Federn (3, 4) bestehende Aufhängung des Probenkörpers (2) in Ruhelage planar gestaltet ist.

## Beschreibung

Die Erfindung betrifft eine Einrichtung mit Aufhängung eines Probenkörper, welcher sich um eine ortsfeste oder eine ortsfest bezogene Drehachse, in Abhängigkeit der Intensität eines Messeffektes im Raum dreht, gemäß Oberbegriff des Patentanspruches 1.

Aus dem Stand der Technik sind Einrichtungen bekannt, bei denen die Aufhängung der Probenmasse durch Federn realisiert werden. Dabei werden zwar auch Torsionen zugelassen, jedoch sind diese zumeist auch von unerwünschten Linearauslenkungen begleitet.

Um Linearauslenkungen zu vermeiden kann eine Drehaufhängung einer Probenmasse auch durch eine feste Drehachse oder ein Spannband realisiert werden, wobei jedoch Reibungskräfte für die Dreh-Gleitlagerung aufgewendet werden müssen, bzw. eine dreidimensionale Anordnund der Elemente notwendig wird. Die Darstellung der Funktion einer selbsttätigen Rückdrehung in eine Drehausgangs- oder - nulllage ist hierbei oftmals nur durch eine aufwendige konstruktive Mitverwendung von Federn ermöglicht.

Ferner handelt es sich bei einer Probenkörperaufhängung der gattungsgemäßen Art um ein ggfs kleines Präzisionsteil. Die gewünschte messeffektabhängige Auslenkung fordert eine präzise Aufhängung. Im Einzelfall handelt es sich dabei um Feinmechanik; in besonderen Fällen sogar um Mikromechanik

Der Erfindung liegt daher die Aufgabe zugrunde, eine sichere, und weitestgehend lateralverschiebungsfreie Drehlagerung einer Probenmassen bei der genannten Einrichtung zu gewährleisten, und dies in Berücksichtigung einer kleinbauenden und kompakten Bauform.

Die gestellte Aufgabe ist bei einer Einrichtung der gattungsgemäßen Art erfindungsgemäß durch die kennzeichnenden Merkmale des Patentanspruches 1 gelöst.

Weitere vorteilhafte Ausgestaltungen sind in den abhängigen Ansprüchen angegeben.

Kern der Erfindung ist hierbei, dass die aus mindestens 2 Federn bestehende Aufhängung des Probenkörpers planar gestaltet ist. Dies bedeutet, dass die Federn fertigungstechnisch aus einem ebenen dünnen Blech geschnitten oder geätzt sind. Alternativ kann auch Silizium dann das Material verwendet werden. Die Federwindungen sind somit geometrisch nicht räumlich aus- oder vorgeformt, sondern quasi planar. Somit lässt sich die Federanordnung einfach fertigen und mit dem Probenkörper leicht verbinden. Auch bei Schwingungsdrehauslenkung des Probenkörpers werden die Federn so beansprucht, dass sie planar bleiben. Sie lassen sich damit einfach fertigen, genügen aber den feinmechanischen Anforderungen in einem Höchstmaß.

In besonders vorteilhafter Weise können die Federn dabei entweder aus Metall oder Glas oder beispielsweise auch aus Silizium bestehen. Da sie planar ausgebildet sind lassen sie sich dementsprechend sowohl aus einem planaren Materialstück gefertigt werden. Bei Metall, Glas sowie vor allem auch Silizium lassen sich auch Ätztechniken vorteilhaft einsetzen.

In diesem Zuge ist in weiterer vorteilhafter Ausgestaltung vorgesehen, dass Probenkörper und Feder aus einem Material bestehen, oder zumindest einstück miteinander verbunden sind.

Ein enormer Vorteil ist hier, dass beispielsweise mittels Ätztechnik hochpräzise Federn hergestellt werden können, und diese dementsprechend planar zu gestalten.

In weiterer vorteilhafter Ausgestaltung ist angegeben, dass mindestens zwei Federn vorgesehen sind, wobei eine der Federn oberhalb, und eine unterhalb des Probenkörpers angeordnet ist. Dadurch wird die gute Positionierung, wie oben beschrieben erreicht.

In weiterer vorteilhafter Ausgestaltung ist angegeben, dass die Federkraftachsen beider Federn auf einer Linie fluchten.

In weiterer vorteilhafter Ausgestaltung ist angegeben, dass vier Federn vorgesehen sind, wobei zwei der Federn oberhalb und zwei weitere unterhalb des Probenkörpers angeordnet sind, derart, das die Federachsen jeweils zweier gegenüberliegender Federn auf einer Linie fluchten, und die bei vier Federn sich ergebenden zwei Linien etwa senkrecht aufeinander stehen. Ein an der Drehachse angreifendes Drehmoment kann dann ein messeffektbewirktes Drehmoment und somit eine rotatorische Auslenkung des Probenkörpers bewirken. Nach Wegfall des Drehmomentes kehrt der Probenkörper aber wieder in seine durch die Federn bestimmte Ausgangslage zurück. Ferner wird eine maximale Federsteifigkeit hinsichtlich einer unerwünschten Linearauslenkung des Probenkörpers bewirkt.

In weiterer vorteilhafter Ausgestaltung ist angegeben, dass die Einrichtung eine paramagnetische Sauerstoffmesseinrichtung ist, und der Probenkörper eine Hantelform aufweist. Hier können die genannten Vorteile und Funktionen geeignet umgesetzt werden.

In weiterer vorteilhafter Ausgestaltung ist angegeben, dass die Federn so aufgehängt sind, dass ihre Federhauptachse lotrecht zur Kraftlinie der Aufhängung steht.

Weiterhin ist ausgestaltet, dass die Federn in einem um den Probenkörper angeordneten Aufhängungsrahmen aufgehängt sind. Damit ist eine sichere, ortsfeste Bezugslage für die Ausgangslage des Probenkörpers gegeben.

In letzter besonders vorteilhafter Ausgestaltung können die Federn gleichzeitig zur Bewerkstelligung von elektrischen Zuleitungen zum Probenkörper dienen. Damit ist eine vorteilhafte, multifunktionale Funktionsintegration gegeben, die zur leichtgängigen und ansonsten reibungsfreien Drehlagerung des Probenkörpers führt. Dies verbessert auch das Messergebnis sowie die Messempfindlichkeit entscheidend.

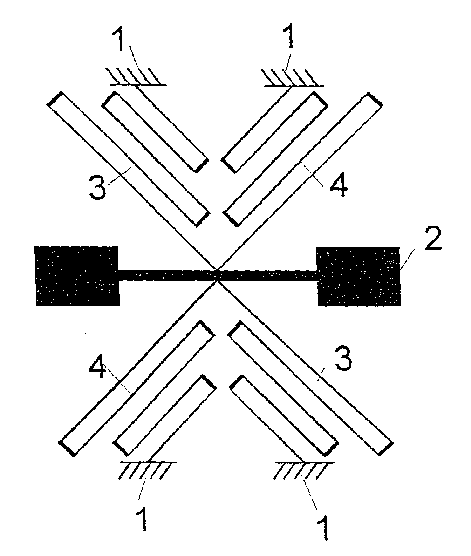

Die Erfindung ist in einem Ausgestaltungsbeispiel in der Zeichnung dargestellt und nachfolgend näher beschrieben.

Die Abbildung zeigt nur die unmittelbare Funktionsumgebung des Probenkörpers 2. Dieser entspricht einer Hantel einer auf paramagnetischem Messprinzip beruhenden Sauerstoffmesseinrichtung. Der Messeffekt bewirkt ein partialdruckabhängiges Drehmoment auf die Hantel. Diese ist hierbei in erfindungsgemäßer Weise mit vier Federn gehalten, welche in einem Halte- oder Befestigungsrahmen 1 angeordnet bzw aufgehängt sind. Die vier Federn teilen sich in zwei sogenannte Federpakete auf, wobei zwei der Federn oberhalb und zwei weitere unterhalb des Probenkörpers angeordnet sind, derart, das die Federachsen jeweils zweier gegenüberliegender Federn auf einer Linie fluchten, und die bei vier Federn sich ergebenden zwei Linien etwa senkrecht aufeinander stehen.

Jeweils zwei auf unterschiedlichen Seiten der durch die Hantelbewegung gebildeten Drehebene und auf einer gemeinsamen Achse fluchtenden Federn bilden jeweils ein sogenanntes Federpaket 3 bzw 4. Hierbei ist zu erkennen, dass die Achse, auf der jeweils zwei Federn zu jeweils einem Federpaket 3 bzw 4 fluchten, nicht die Elongationsachse oder -richtung ist, in der die Federn normalerweise direkt gezogen würden. Hieran wird der erfindungsgemäße Effekt deutlich, nämlich, dass deren Federkraftrichtung weder zum Probenkörper noch zur Drehachse parallel stehen. Die Federkraftrichtungen sind gleichbedeutend mit den besagten Elongationsrichtungen.

Dabei ergibt sich der oben bereits beschriebene Vorteil der Minimierung transversaler Auslenkungen.

Die einzelnen Federn können dabei neben der reinen Federfunktion auch gleichzeitig die elektrische Funktion der Stromzu- und/oder Messsignalabführung haben. Dadurch, dass die Federpakete bzw die Einzelfedern der Federpakete 3 und 4 im zentralen Drehpunkt angreifen wird bei einer solchen Realisierung der elektrischen Kontaktierung eine zusätzliche Drehhemmung vermieden.

Wichtig ist hierbei, dass sich die Präzision planarer Federn oder Federpakete hier besonders vorteilhaft erwiesen hat, weil diese zum einen durch hochpräzise Ätztechnik hergestellt werden können, und zum anderen ein hohes Maß an Fertigungspräzision erzielbar zu Gunsten einer feinstimmigen Probenkörperaufhängung, und damit einer präzisen Messempfindlichkeit.

Durch dies Federgstaltung lassen sich Anordnungen erstellen, die hinsichtlich ihrer geometrischen Abmessungen in den Bereich der Mikromechanik gehören.

## Patentansprüche

1. Einrichtung mit Aufhängung eines Probenkörpers, welcher sich um eine ortsfeste oder eine ortsfest bezogene Drehachse in Abhängigkeit der Intensität eines Messeffektes im Raum dreht,
**dadurch gekennzeichnet,**
**dass** die aus mindestens 2 Federn (3, 4) bestehende Aufhängung des Probenkörpers (2) in Ruhelage planar gestaltet ist.

2. Einrichtung nach Anspruch 1,
**dadurch gekennzeichnet,**
**dass** die Federn (3, 4) aus Metall bestehen.

3. Einrichtung nach Anspruch 1,
**dadurch gekennzeichnet,**
**dass** die Federn (3, 4) aus Silizium bestehen.

4. Einrichtung nach Anspruch 1,
**dadurch gekennzeichnet,**
**dass** die Federn (3, 4) aus Glas bestehen.

5. Einrichtung einem der vorhergehenden Ansprüche ,
**dadurch gekennzeichnet,**
**dass** Probenkörper (2) und Federn (3, 4) aus gleichem Material bestehen.

6. Einrichtung nach einem der vorhergehenden Ansprüche,
**dadurch gekennzeichnet,**
**dass** Probenkörper (2) und Federn (3, 4) einstückig miteinander verbunden sind.

7. Einrichtung nach nach einem der vorhergehenden Ansprüche,
**dadurch gekennzeichnet,**
**dass** mindestens zwei Federn (3, 4) vorgesehen sind, wobei eine der Federn oberhalb, und eine unterhalb des Probenkörpers (2) angeordnet ist.

8. Einrichtung nach Anspruch 7,
**dadurch gekennzeichnet,**
**dass** die Federkraftachsen beider Federn auf einer Linie fluchten.

9. Einrichtung nach einem der vorhergehenden Ansprüche,
**dadurch gekennzeichnet,**
**dass** vier Federn vorgesehen sind, wobei zwei der Federn oberhalb und zwei weitere unterhalb des Probenkörpers (2) angeordnet sind, derart, das die Federachsen jeweils zweier gegenüberliegender Federn auf einer Linie fluchten, und die bei vier Federn sich ergebenden zwei Linien etwa senkrecht aufeinander stehen.

10. Einrichtung nach einem der vorhergehenden Ansprüche,
**dadurch gekennzeichnet,**
**dass** die Einrichtung eine paramagnetische Sauerstoffmesseinrichtung ist, und der Probenkörper (2) eine Hantelform aufweist.

11. Einrichtung nach einem der vorhergehenden Ansprüche,
**dadurch gekennzeichnet,**
**dass** die Federn (3, 4) so aufgehängt sind, dass ihre Federhauptachse lotrecht auf der Kraftlinie der Aufhängung steht.

12. Einrichtung nach einem der vorhergehenden Ansprüche,
**dadurch gekennzeichnet,**
**dass** die Federn (3, 4) in einem um den Probenkörper (2) angeordneten Aufhängungsrahmen (1) aufgehängt sind.

13. Einrichtung nach einem der vorhergehenden Ansprüche,
**dadurch gekennzeichnet,**
**dass** die Federn (3, 4) gleichzeitig zur Bewerkstelligung von elektrischen Zuleitungen zum Probenkörper (2) dienen.

14. Einrichtung nach einem der vorhergehenden Ansprüche,
**dadurch gekennzeichnet,**
**dass** die Federn oder die Federpakete aus einem dünnen Blech geschnitten sind.

15. Einrichtung nach einem der vorhergehenden Ansprüche,
**dadurch gekennzeichnet,**
**dass** die Federn oder die Federpakete aus einem dünnen Blech mittels Ätztechnik gefertigt sind.
